# EUROPÄISCHE PATENTSCHRIFT

(11) **EP 1 584 265 B1**
(45) Veröffentlichungstag und Bekanntmachung des Hinweises auf die Patenterteilung: **09.06.2010**
(21) Anmeldenummer: 05101743.2
(22) Anmeldetag: 07.03.2005
(51) Int. Cl.: A47C 1/027, A47C 20/04, F16C 11/10, B60N 2/235, E05D 11/10

(54) **Rastbeschlag**
Locking device
Dispositif de verrouillage

(30) Priorität: 08.04.2004 DE 202004005529 U
(43) Veröffentlichungstag der Anmeldung: 12.10.2005
(73) Patentinhaber: FERDINAND LUSCH GMBH & CO. KG., 33649 Bielefeld (DE)
(72) Erfinder: Regehr, Heinrich, 32312 Lübbecke (DE)
(74) Vertreter: Cohausz & Florack

(56) Entgegenhaltungen:
- DE-B- 1 138 199
- DE-U1- 8 318 928
- DE-U1- 29 508 020

## Beschreibung

Die vorliegende Erfmdung betrifft einen Rastbeschlag gemäß dem Oberbegriff des Anspruches 1.

Derartige Rastbeschläge werden eingesetzt, um Funktionsteile, wie beispielsweise Lehnen oder Kopfstützen aus einer Grundstellung in eine veränderte Stützstellung zu verschwenken, wobei der das zu verschwenkende Teil tragende Rasthebel in unterschiedliche Winkelstellungen verschwenkbar und dort jeweils gegen ein Zurückschwenken arretierbar ist. Aus einer vorgeschwenkten Gebrauchs-Endstellung heraus ist das Funktionsteil freilaufend zurückverschwenkbar, wozu die Arretierung aufgehoben wird.

Ein gattungsgemäßer Rastbeschlag ist beispielsweise aus der DE 83 18 928 U1 bekannt, wobei zur Arretierung des schwenkbaren Rasthebels ein Klinkengesperre vorgesehen ist, das aus einer Außenverzahnung eines Rasthebels und einer Sperrklinke besteht, die in der Arretierstellung in eine Zahnlücke der Außenverzahnung eingreift.

Dabei sind die beiden Rasthebel mit einem ihrer Enden auf einer gemeinsamen Schwenkachse gelagert, das heißt, in diesem Bereich überlappen sich die Rasthebel.

Wenngleich sich die Funktion dieses bekannten Rastbeschlages bewährt hat, sind jedoch einige Nachteile zu beklagen, die zum einen die Handhabung beeinträchtigen und zum anderen die Platzierung beispielsweise in einem Sitz- oder Liegemöbel erschweren. Letzteres deshalb, weil die beiden Rasthebel durch die gemeinsame Schwenkachse bereichsweise übereinanderliegen, wodurch sich eine relativ große Bauhöhe ergibt. Diese Bauhöhe wird zusätzlich noch vergrößert, wenn, wie in der DE 295 08 020 U1 vorgeschlagen, die Verzahnung und die Sperrklinke in einem Gehäuse platziert sind, das durch eine entsprechende Formgebung der Rasthebel gebildet wird. Dieser hohe Aufbau verhindert naturgemäß eine geforderte platzsparende Unterbringung von Funktionsbeschlägen.

Bauartbedingt ist überdies die Zahnteilung der Außenverzahnung relativ groß, da die eingreifende Sperrklinke eine ausreichende Belastungsfähigkeit aufweisen muss, was einer gewünschten feinstufigen Verstellung entgegensteht.

Der vorliegenden Erfindung liegt daher die Aufgabe zugrunde, einen Rastbeschlag der gattungsgemäßen Art so weiterzuentwickeln, dass er mit konstruktiv geringem Aufwand eine verbesserte Handhabung und geringere Bauhöhe aufweist.

Diese Aufgabe wird durch einen Rastbeschlag gelöst, der die Merkmale des Anspruches 1 aufweist.

Durch diese konstruktive Ausgestaltung fluchten die beiden Rasthebel zueinander, zumindest in den einander zugewandten Bereichen, das heißt, sie liegen in einer Ebene, wodurch sich naturgemäß die Bauhöhe reduziert. Auch das Sperrelement ist insofern auf gleicher Höhe mit den Rasthebeln angeordnet und greift in Funktionsstellung derart an den Rasthebeln an, dass ein Zurückverschwenken in eine Grundstellung zunächst ausgeschlossen ist.

Erst nach Erreichen einer aufgeschwenkten Endposition der Rasthebel wird das Sperrelement außer Eingriff gedrückt gegen die Kraft einer Druckfeder.

Hierzu ist ein Ausrückhebel vorgesehen, der durch einen feststehenden Anschlagzapfen gegen das Sperrelement gedrückt wird und dies aus der Verriegelungsposition herausdrückt. Danach können die Rasthebel frei in eine Grundstellung zurückgeschwenkt werden.

Nach einer vorteilhaften Weiterbildung der Erfindung ist vorgesehen, dass das Sperrelement aus einem verzahnten Segment besteht, dessen Zähne in Arretierstellung federbelastet in die Verzahnungen der Rasthebel eingreifen.

Anstelle eines solchen verzahnten Segmentes kann auch ein federbelasteter Sperrkeil vorgesehen sein, der an den kreisbogenförmigen Enden der Rasthebel, außerhalb der Verzahnungen eingreift und ebenso wie das zuvor genannte verzahnte Segment mittels des Ausrückhebels aus der Arretierstellung herausdrückbar ist.

Die Zähne der Verzahnungen der Rasthebel können relativ klein gehalten sein, wodurch sich zum einen eine feinstufige Winkelverstellung der Rasthebel ergibt und zum anderen eine höhere Belastbarkeit als im Stand der Technik, da mehr Zähne zur Kraftübertragung gleichzeitig zum Einsatz kommen. Dies betrifft insbesondere die Zähne des verzahnten Segmentes, die, wie erwähnt, in beide Verzahnungen der Rasthebel blockierend eingreifen.

Neben den geschilderten funktionellen und Handhabungsvorteilen ist auch eine kostengünstige Herstellung des neuen Rastbeschlages bemerkenswert, da zu dessen Realisierung nur wenige einfache Bauteile erforderlich sind. Dabei können die Bauteile im wesentlichen durch Stanzen oder ähnliche spanlose Fertigungsverfahren hergestellt werden. Dies ist vor allem deshalb von Bedeutung, als solche Rastbeschläge in großen Stückzahlen hergestellt werden und Verwendung finden.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen erfindungsgemäßen Rastbeschlag in einer Draufsicht;
- Figur 2: eine Seitenansicht des Rastbeschlages gesehen in Richtung des Pfeiles II in Figur 1;
- Figur 3: eine Seitenansicht des Rastbeschlages gesehen in Richtung des Pfeiles III in Figur 1;
- Figuren 4 bis 6: den Rastbeschlag gemäß den Figuren 1 bis 3 in unterschiedlichen Stellungen, jeweils in einer Draufsicht, und
- Figuren 7 bis 9: ein weiteres Ausführungsbeispiel des Rastbeschlages nach den Figuren 1 bis 3, ebenfalls jeweils in unterschiedlichen Positionen in vergrößerten Einzelausschnitten in einer Draufsicht.

In den Figuren sind Rastbeschläge, insbesondere für verstellbare Lehnen- oder Stützteile eines Sitz- oder Liegemöbels dargestellt, mit jeweils zwei zueinander verschwenkbaren Rasthebeln 1, 2, die in unterschiedlichen Winkelstellungen verriegelbar sind. Die beiden Rasthebel 1, 2 sind an ihren einander zugewandten, kreisbogenförmigen Enden mit Verzahnungen 3, 4 versehen, die ineinandergreifen.

Die beiden Rasthebel 1, 2 sind mittels eines Koppelteiles 10, das gehäuseartig die beiden kreisbogenförmigen Enden der Rasthebel 1, 2 überdeckt, miteinander verbunden. Hierzu ist das Koppelteil 10 drehbar an jeweils einer Schwenkachse 15 angeschlossen, von denen jeweils eine in einem der beiden Rasthebel 1, 2 angeordnet ist und dabei, bezogen auf die kreisbogenförmige Verzahnung, zentrisch angeordnet sind.

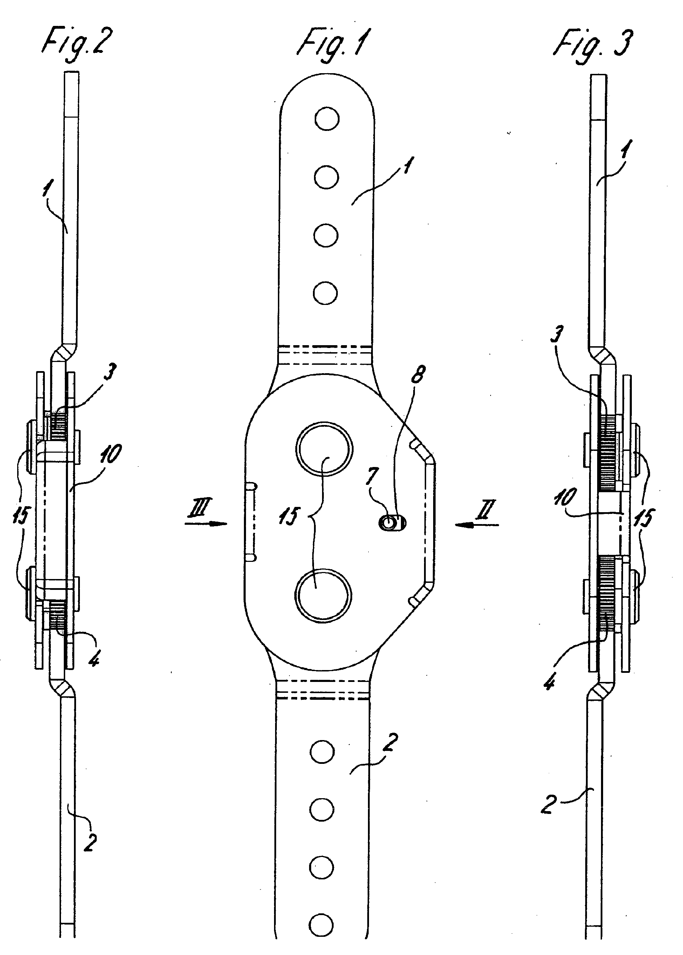

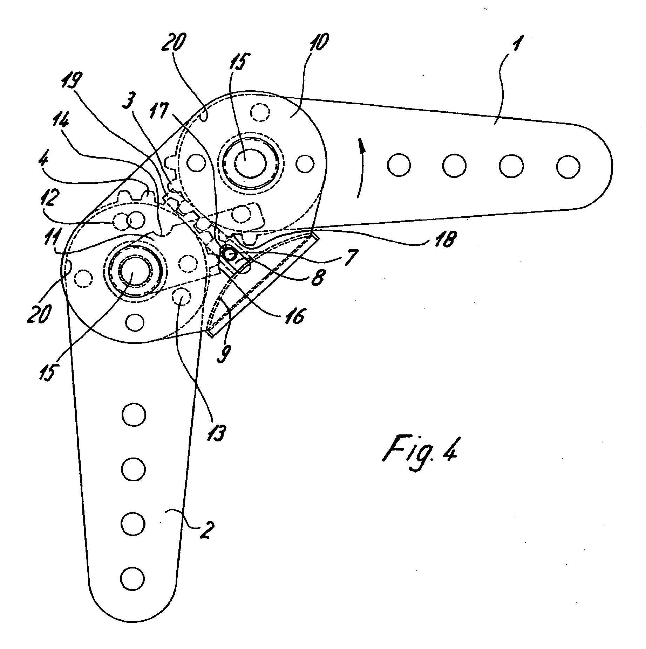

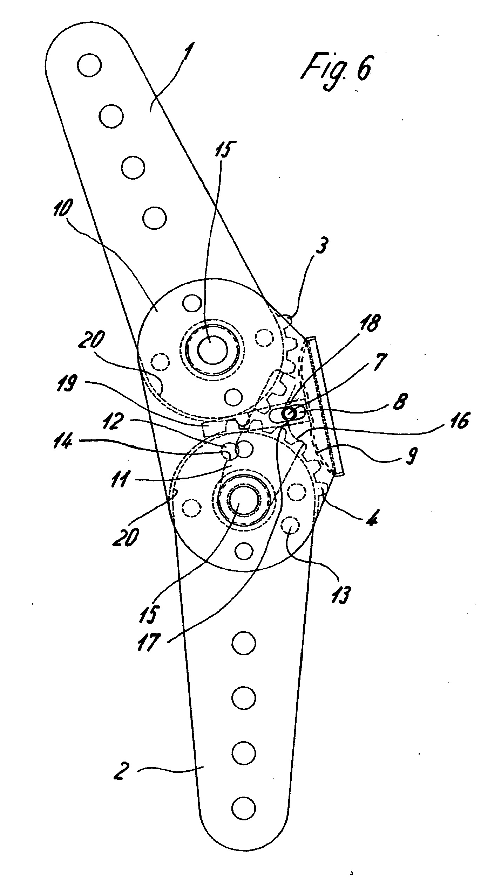

Wie insbesondere die Figuren 2 und 3 sehr deutlich zeigen, wird durch die Anordnung der Rasthebel 1, 2 auf getrennten Schwenkachsen 15 eine sehr geringe Bauhöhe erreicht, da die beiden Rasthebel 1, 2 im wesentlichen fluchtend zueinander stehen. Die selbsttätige Verriegelung der Rasthebel 1, 2 in unterschiedlichen Winkelstellungen wird erreicht durch ein federbelastetes Sperrelement, das bei dem in den Figuren 4 bis 6 gezeigten Ausführungsbeispiel aus einem Sperrkeil 19 besteht, der zwischen den beiden kreisbogenförmigen Enden der Rasthebel 1, 2 angeordnet ist und sich in Verriegelungsstellung an jeweils einem konzentrisch zur zugeordneten Verzahnung 3, 4 verlaufenden Bündchen 20 abstützt.

Die Federbelastung des Sperrkeiles 19 erfolgt über eine Blattfeder 9, die im Innern des Koppelgliedes 10 angeordnet ist und sich an deren Wandung einerseits und andererseits am Sperrkeil 19 abstützt. Weiter weist der Sperrkeil 19 einen Anschlagbolzen 7 auf, der in einem Langloch 8 des Koppelgliedes 10 geführt ist.

Mittels eines an der Schwenkachse 15 des einen Rasthebels 2 angeschlossenen Ausrückhebels 11, der in Wirkverbindung mit dem Anschlagbolzen 7 steht, ist der Sperrkeil 19 aus einer Arretierposition herausdrückbar.

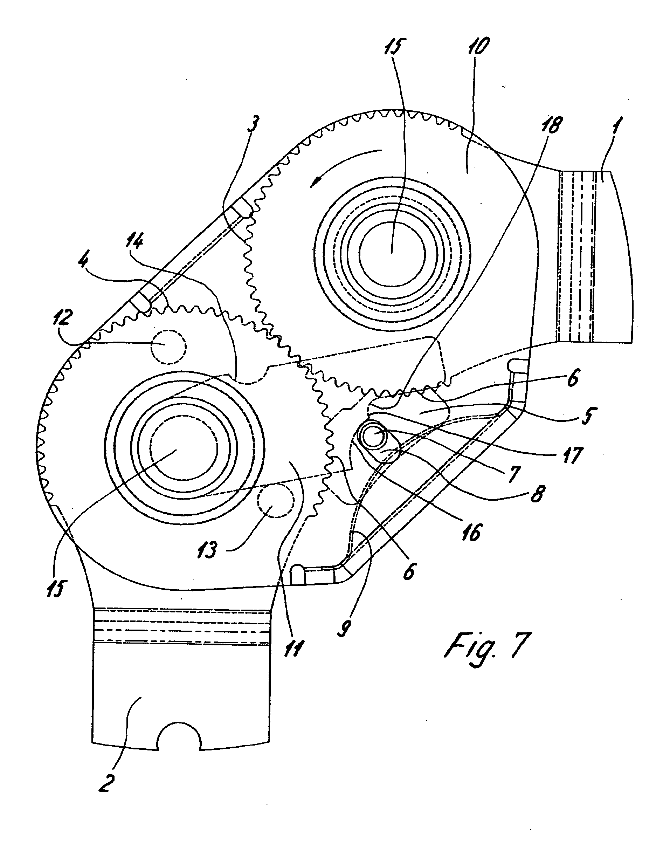

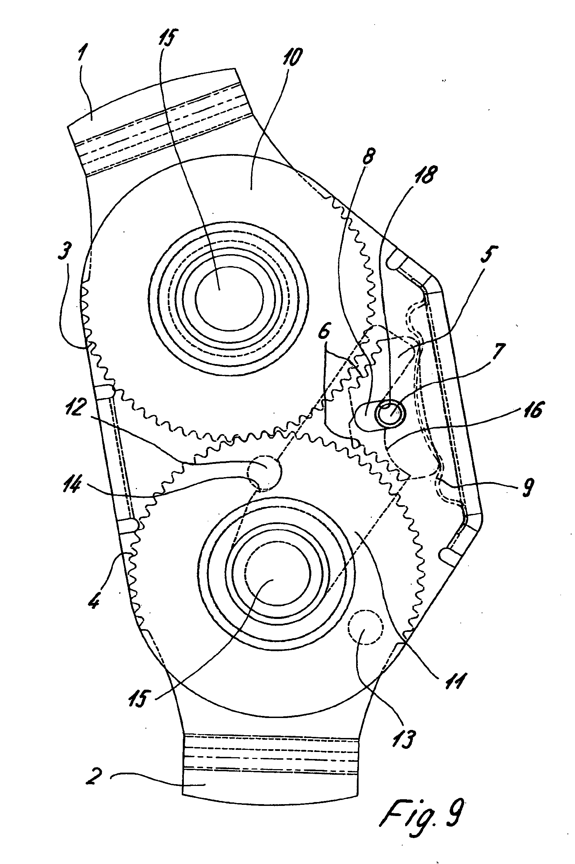

Dieses Funktionsprinzip liegt auch dem Ausführungsbeispiel entsprechend den Figuren 7 bis 9 zugrunde, in dem das Sperrelement durch ein verzahntes Segment 5 gebildet ist, dessen Zähne zur Arretierung der Rasthebel 1, 2 in deren Verzahnungen 3, 4 eingreifen.

Die Figuren 4 und 7 zeigen jeweils eine Grundstellung des Rastbeschlages, wobei der Rasthebel 2 feststehend beispielsweise an dem Möbel angeschlossen ist, während der Rasthebel 1 relativ dazu in Pfeilrichtung verschwenkbar ist.

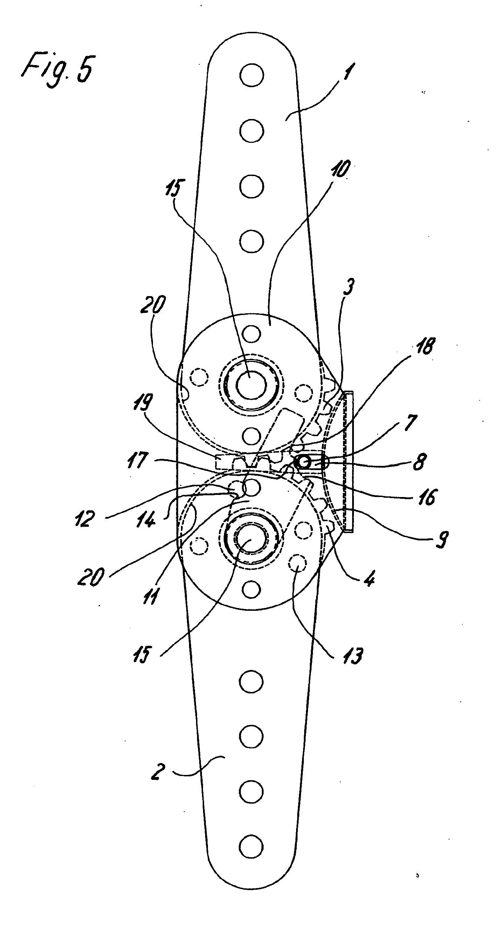

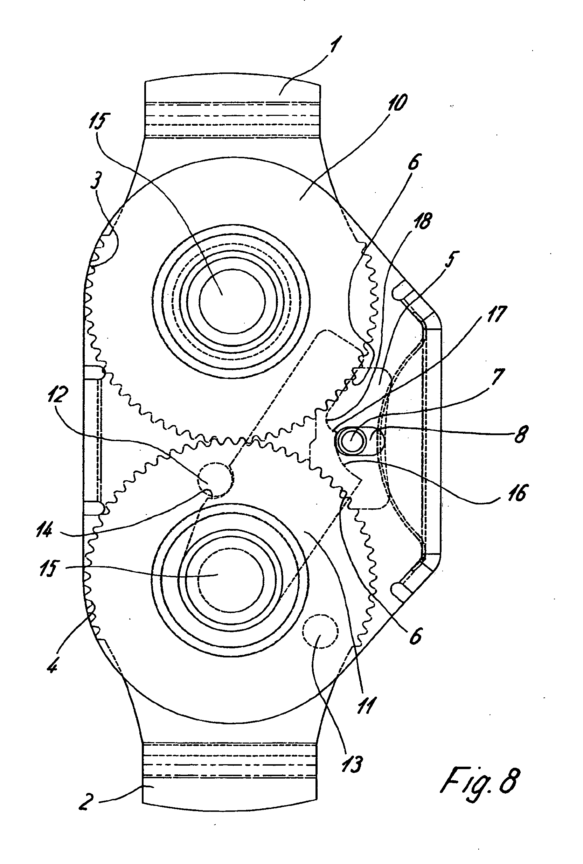

Bei Drehung des Rasthebels 1 und Kämmen der Verzahnung 4 wird der Sperrkeil 19 bzw. das verzahnte Segment 5 jeweils gegen die Kraft der Blattfeder 9 aus der Verzahnung gedrückt bis in eine beliebige Stellung, wie sie beispielsweise in den Figuren 5 und 8 dargestellt ist.

Die Arretierung der Rasthebel 1, 2 zueinander bei Belastung entgegen der Pfeilrichtung erfolgt durch Eindrücken des Sperrkeiles 19 in den durch die Bündchen 20 gebildeten Spalt, so das die beiden Rasthebel 1, 2 praktisch gegeneinander verklemmt werden.

Bei einem weiteren Bewegen des Rasthebels 1 in Richtung des Pfeiles wird der Sperrkeil 19 aus seiner Klemmposition in Richtung der Blattfeder 9 gedrückt, so dass ein Freilauf erreicht wird.

Funktionsgleich erfolgt dies bei dem Ausführungsbeispiel der Figuren 7 bis 9, wobei hier das verzahnte Segment 5 bei Belastung des Rasthebels 1 entgegen der Pfeilrichtung in den gebildeten Zwickel gezogen wird, wohingegen bei Entlastung, also bei Drehen in Richtung des Pfeiles, das Segment 5 aus dem Zwickelbereich herausgedrückt wird gegen die Kraft der Blattfeder 9.

Ausgehend von einer Endstellung des Rastbeschlages gemäß den Figuren 5 und 8, bei denen der Sperrkeil 19 bzw. das Segment 5 noch in arretierendem Eingriff stehen, erfolgt bei einem weiteren Verschwenken in Pfeilrichtung ein Herausdrücken des Sperrkeiles 19 bzw. des Segmentes 5 aus ihrer Arretierposition, wozu der Ausrückhebel 11 an einem Anschlagzapfen 12 anliegt, der am kreisbogenförmigen Ende des Rasthebels 2 befestigt ist. Der Ausrückhebel 11 kann dadurch nicht mehr der Verschwenkung des Koppelgliedes 10 folgen, liegt jedoch mit einer Anschlagkurve 16 am Anschlagbolzen 7 an. Der Ausrückhebel 11 bildet somit eine Sperre für den Anschlagbolzen 7 und damit für den Sperrkeil 19 bzw. das Segment 5, das ebenfalls in dieser Position verharrt und außer Eingriff kommt mit den Verzahnungen 3, 4. Dabei wird die Blattfeder 9 verformt und der Anschlagbolzen 7 überfährt eine Arretiernase 17 des Ausrückhebels 11, die im Übergangsbereich zwischen der Anschlagkurve 16 und einer Anschlagkurve 18 vorgesehen ist. In der entriegelten Stellung liegt dann der Anschlagbolzen 7 an der Anschlagkurve 18 an.

Die entriegelte Stellung bleibt beibehalten, bis in eine verschwenkte Grundstellung (Figuren 4 und 7), in der der Ausrückhebel 11 an einem weiteren Anschlagzapfen 13 anschlägt, der ebenso wie der Anschlagzapfen 12, der im übrigen in Funktionsstellung in einer Kerbe 14 des Ausrückhebels 11 einliegt, auf dem kreisbogenförmigen Ende des Rasthebels 2 angeordnet ist.

Bei Weiterdrehen des Rasthebels 1 entgegen der Pfeilrichtung in eine Grundstellung wird der Ausrückhebel 11 durch den Anschlagzapfen 13 gehalten, während das Gehäuse 10 und mit ihm das Segment 5 bzw. der Sperrkeil 19 und der Anschlagbolzen 7 durch die Blattfeder 9 in arretierenden Kontakt mit den Rasthebeln 1, 2 gedrückt wird. Dabei wird die Arretiernase 17 vom Anschlagbolzen 7 überfahren, bis dieser an der Anschlagkurve 16 zur Anlage kommt. Die Arretiernase 17 ist so geformt, dass bei einem Verschwenken des Rasthebels 1 in Pfeilrichtung der Anschlagbolzen 7 nicht in die Anschlagkurve 18 gleiten kann.

## Patentansprüche

1. Rastbeschlag, insbesondere für verstellbare Lehnen- oder Stützteile eines Sitz- oder Liegemöbels, mit zwei zueinander verschwenkbaren Rasthebeln (1, 2), die in unterschiedlichen Winkelstellungen mittels eines federbelasteten Sperrelements verriegelbar sind, das bei Erreichen einer Endstellung aus seiner Ver- in eine Entriegelungsstellung bringbar ist, wobei beide Rasthebel (1, 2) an ihren kreisbogenförmigen, einander zugewandten Enden mit gleichartigen, ineinandergreifenden Verzahnungen (3, 4) versehen und über ein Koppelteil (10) miteinander verbunden sind, das an Schwenkachsen (15) angelenkt ist, von denen jeweils eine, bezogen auf das kreisbogenförmige Ende, zentrisch an einem der beiden Rasthebel (1, 2) angeschlossen ist, **dadurch gekennzeichnet, dass** an einer Schwenkachse (15) ein Ausrückhebel (11) angeschlossen ist, der zur Entriegelung im Bereich einer ausgebildeten Anschlagkurve (16) an einem Anschlagbolzen (7) des Rastelementes (5) anliegt, der in einem Langloch (8) des Koppelteiles (10) geführt ist.

2. Rastbeschlag nach Anspruch 1, **dadurch gekennzeichnet, dass** das Sperrelement als verzahntes Segment (5) ausgebildet ist.

3. Rastbeschlag nach Anspruch 1, **dadurch gekennzeichnet, dass** das Sperrelement als Sperrkeil (19) ausgebildet ist.

4. Rastbeschlag nach Ansprüche 2 oder 3, **dadurch gekennzeichnet, dass** das Segment (5) bzw. der Sperrkeil (19) in Richtung der kreisbogenförmigen Enden verschiebbar gelagert ist.

5. Rastbeschlag nach einem der vorhergehenden Ansprüche, **dadurch gekennzeichnet, dass** das Sperrelement mittels einer Blattfeder (9), die sich am Koppelteil (10) abstützt, in Richtung der kreisbogenförmigen Enden der Rasthebel (1, 2) drückbar ist.

6. Rastbeschlag nach einem der vorhergehenden Ansprüche, **dadurch gekennzeichnet, dass** die Verzahnung (6) des Rastelementes (5) in Arretierstellung mit den Verzahnungen (3, 4) korrespondiert.

7. Rastbeschlag nach Anspruch 2, **dadurch gekennzeichnet, dass** das verzahnte Segment (5) in Arretierstellung in einen zwischen den beiden Verzahnungen (3, 4) gebildeten Zwickel eingreift.

8. Rastbeschlag nach Anspruch 3, **dadurch gekennzeichnet, dass** der Sperrkeil (19), ausgehend vom Anschluss an die Blattfeder (9) sich verjüngt und an konzentrisch zu den Verzahnungen (3, 4) verlaufenden Bündchen (20) anliegt.

9. Rastbeschlag nach einem der vorhergehenden Ansprüche, **dadurch gekennzeichnet, dass** sich an die Anschlagkurve (16) eine Arretiernase (17) anschließt, in deren Folge eine Anschlagkurve (18) ausgebildet ist.

10. Rastbeschlag nach einem der vorhergehenden Ansprüche, **dadurch gekennzeichnet, dass** an dem kreisbogenförmigen Ende des Rasthebels (2), an dem der Ausrückhebel (11) angeschlossen ist, zwei Anschlagzapfen (12, 13) befestigt sind, durch die die Schwenkbewegung des Ausrückhebels (11) eingegrenzt ist.

11. Rastbeschlag nach Anspruch 10, **dadurch gekennzeichnet, dass** bei Anlage des Ausrückhebels (11) am Anschlagzapfen (12) das Sperrelement aus einer Arretierposition herausdrückbar ist.

## Claims

1. Catch fitting, in particular for adjustable back-rest parts or support parts of a piece of furniture for sitting or lying on, having two notch levers (1, 2) which can be swivelled in relation to one another and which can be locked in various angular positions by means of a springloaded locking element which when it reaches an end position can be brought out of its locking position into an unlocking position, wherein both notch levers (1, 2) are provided with similar, intermeshing toothings (3, 4), on their circular arc shaped ends facing one another, and are connected to one another via a coupling part (10) which is coupled to swivel shafts (15) one of which in each case, with respect to the circular arc shaped end, is centrically attached to one of the two notch levers (1, 2), **characterised in that** a release lever (11) is attached to a swivel shaft (15), which release lever (11) for unlocking in the region of a formed stop curve (16) abuts against a stop pin (7) of the catch element (5) which is guided into a slot (8) of the coupling part (10).

2. Catch fitting according to Claim 1, **characterised in that** the locking element is formed as a toothed segment (5).

3. Catch fitting according to Claim 1, **characterised in that** the locking element is formed as a locking wedge (19).

4. Catch fitting according to Claim 2 or 3, **characterised in that** the segment (5) or the locking wedge (19) is mounted so that it can move in the direction of the circular arc shaped ends.

5. Catch fitting according to any one of the preceding claims, **characterised in that** the locking element can be pushed in the direction of the circular arc shaped ends of the notch levers (1, 2) by means of a leaf spring (9) which is supported at the coupling part (10).

6. Catch fitting according to any one of the preceding claims, **characterised in that** the toothing (6) of the catch element (5) in the locked position corresponds with the toothings (3, 4).

7. Catch fitting according to Claim [6], **characterised in that** the toothed segment (5) in the locked position meshes with a crotch formed between the two toothings (3, 4).

8. Catch fitting according to Claim [7], **characterised in that**, starting from its connection to the leaf spring (9), the locking wedge (19) tapers and abuts against cuffs (20) running concentrically to the toothings (3, 4).

9. Catch fitting according to any one of the preceding claims, **characterised in that** a locking projection (17) is joined to the stop curve (16) following which a stop curve (18) is formed.

10. Catch fitting according to any one of the preceding claims, **characterised in that** two stop pins (12, 13) are fixed to the circular arc shaped end of the notch lever (2), to which the release lever (11) is attached, by means of which stop pins (12, 13) the swivelling movement of the release lever (11) is limited.

11. Catch fitting according to Claim 10, **characterised in that** the locking element can be pushed out of a locked position when the release lever (11) butts against the stop pin (12).

## Revendications

1. Dispositif de verrouillage, en particulier pour des éléments d'accotoirs ou de dossiers de sièges ou de meubles de couchage, avec deux leviers de verrouillage (1, 2) pouvant pivoter l'un par rapport à l'autre, qui peuvent être verrouillés dans différentes positions angulaires, au moyen d'un élément de blocage sollicité par ressort, qui peut être amené de sa position de verrouillage dans une position de déverrouillage, quand la position finale est atteinte, les deux leviers de verrouillage (1, 2) étant pourvus à leurs extrémités en forme d'arc de cercle, orientées l'une vers l'autre, de dentures (3, 4) du même genre, qui entrent en prise les unes avec les autres, et étant reliés ensemble par l'intermédiaire d'une pièce de couplage (10), qui est articulée sur des axes de pivotement (15), dont respectivement l'un est raccordé, centralement par rapport à l'extrémité en forme d'arc de cercle, à l'un des deux leviers de verrouillage (1, 2), **caractérisé en ce que**, sur un axe de pivotement (15), est raccordé un levier de désaccouplement (11), qui, lors du verrouillage, porte, dans la région d'une courbe de butée (16), contre un boulon de butée (7) de l'élément de blocage (5), qui est guidé dans un trou oblong (8) de la pièce de couplage (10).

2. Dispositif de verrouillage selon la revendication 1, **caractérisé en ce que** l'élément de blocage est conçu en tant que segment denté (5).

3. Dispositif de verrouillage selon la revendication 1, **caractérisé en ce que** l'élément de blocage est conçu en tant que cale de blocage (19).

4. Dispositif de verrouillage selon revendication 2 ou 3, **caractérisé en ce que** le segment (5), respectivement la cale de blocage (19) est monté en pouvant être déplacé en direction des extrémités en forme d'arc de cercle.

5. Dispositif de verrouillage selon l'une des revendications précédentes, **caractérisé en ce que** l'élément de blocage peut être pressé en direction des extrémités en forme d'arc de cercle des leviers de verrouillage (1, 2), au moyen d'un ressort à lames (9), qui prend appui sur la pièce de couplage (10).

6. Dispositif de verrouillage selon l'une des revendications précédentes, **caractérisé en ce que** la denture (6) de l'élément de blocage (5) en position d'arrêt correspond aux dentures (3, 4).

7. Dispositif de verrouillage selon revendication 6, **caractérisé en ce que** le segment denté (5), en position de blocage, s'engage dans un coin, formé entre les deux dentures (3, 4).

8. Dispositif de verrouillage selon revendication 7, **caractérisé en ce que** le cale de blocage (19) s'amincit à partir du raccord au ressort à lames (9) et porte contre des collets (20), qui s'étendent concentriquement par rapport aux dentures (3, 4).

9. Dispositif de verrouillage selon l'une des revendications précédentes, **caractérisé en ce qu'**à la courbe de butée (16) se raccorde un nez d'arrêt (17), à la suite duquel est formée une courbe d'arrêt (18).

10. Dispositif de verrouillage selon l'une des revendications précédentes, **caractérisé en ce que** deux tenons de butée (12, 13), par lesquels le mouvement de pivotement du levier de désaccouplement (11) est limité, sont fixés à l'extrémité en forme d'arc de cercle du levier de verrouillage (2), à laquelle le levier de désaccouplement (11) est raccordé.

11. Dispositif de verrouillage selon la revendication 10, **caractérisé en ce que**, lors de l'entrée en contact du levier de désaccouplement (11) avec le tenon de butée (12), l'élément de blocage peut être pressé hors de la position d'arrêt.
